# EUROPEAN PATENT APPLICATION

(11) **EP 1 195 951 A2**
(43) Date of publication of application: **10.04.2002**
(21) Application number: 01402108.3
(22) Date of filing: 03.08.2001
(51) Int. Cl.: H04L 12/44, G06F 1/24

(54) **Method and apparatus for maintaining data communication during a line card soft reset operation**

(30) Priority: 10.08.2000 US 636117
(71) Applicant: ALCATEL, 75008 Paris (FR)
(72) Inventor: Roral, Joseph Graham, Kanata, Ontario K2K 2N5 (CA); Peterson, Frank Ian, Clayton, Ontario K0A 1P0 (CA); Sorrini, Piero Dario, Ottawa, Ontario K2K 3E2 (CA)
(74) Representative: Lenne, Laurence

(57) **Abstract**

A method and apparatus for maintaining data communication during a line card soft reset operation is described. A line card processor is reset while an operational configuration of a data path coupled to the line card processor is preserved. Interlink management interface link layer (ILMI) support and switched virtual connection (SVC) signalling links are maintained through a control card circuit coupled to the line card circuit while the line card processor is being reset. Line card connection parameters are stored in the control card circuit while the line card processor is being reset. Data path devices are readable as well as writable to allow connection parameters to be read from the data path devices. A soft reset revision number is provided and used to identify software loads requiring a hard reset operation.

## Description

### Technical Field of the Invention

The invention relates generally to networking apparatus and methods and, more specifically, to a method and apparatus for resetting a network line card circuit.

### Background of the Invention

Data networks allow various types of data to be communicated from one location to another. Rather than provide point-to-point connections between every conceivable set of locations between which data may be desired to be communicated, it is generally most efficient to consolidate data from various sources into a single medium. To route the data to its intended destination, a switching or routing device is typically interposed in the communication medium.

Such switching or routing devices typically include a switching fabric that performs the actual switching of the data, and well as line cards that couple the switching fabric to the communications medium. A processor executing a software program is generally provided to control the line card. However, the processor occasionally needs to be reset to change the software application load being executed by the processor. Unfortunately, resetting the processor in previous line cards causes all connections between the communications medium and the switching fabric to be lost. When the connections are lost, the devices sending and receiving the data over the network must identify that the connection has been lost and initiate a request for a new connection. The loss of the connections causes an interruption of communications, and the need to request the establishment of new connections causes delays and additional administrative overhead messages to be communicated over the network. Thus, a method and apparatus is needed to avoid the loss of connections and the need for initiating new connections during a reset operation of a line card circuit.

### Brief Description of the Drawings

FIG. 1 is a block diagram illustrating an example of network apparatus in conjunction with which the present invention may be implemented.
FIG. 2 is a block diagram illustrating network apparatus according to an embodiment of the present invention.
FIG. 3 is a diagram illustrating an example of connection information, such as connection parameters, that may be stored in connection parameter subsystem 205 in accordance with an embodiment of the present invention.
FIG. 4 is a flow diagram illustrating a process for determining a reset operation for a line card control subsystem in accordance with an embodiment of the present invention.
FIG. 5 is a flow chart illustrating a process for allowing resetting of a line card control subsystem in accordance with an embodiment of the present invention.
FIG. 6 is a flow chart illustrating a process for managing connection requests occurring during a soft reset operation of a line card control subsystem in accordance with an embodiment of the present invention.

### Detailed Description of a Preferred Embodiment

A method and apparatus for maintaining data communication during a line card soft reset operation is described. A line card processor is reset while an operational configuration of a data path coupled to the line card processor is preserved. All resource signalling links, such as interlink management interface (ILMI) link layer support, switched virtual connection (SVC) signalling links, and control packet switching system (CPSS, a proprietary network protocol for communication between equipment) links are maintained through a control card circuit coupled to the line card circuit while the line card processor is being reset. Line card connection parameters are stored in the control card circuit while the line card processor is being reset. Data path devices are readable as well as writable to allow connection parameters to be read from the data path devices. A soft reset revision number is provided and used to identify software loads requiring a hard reset operation.

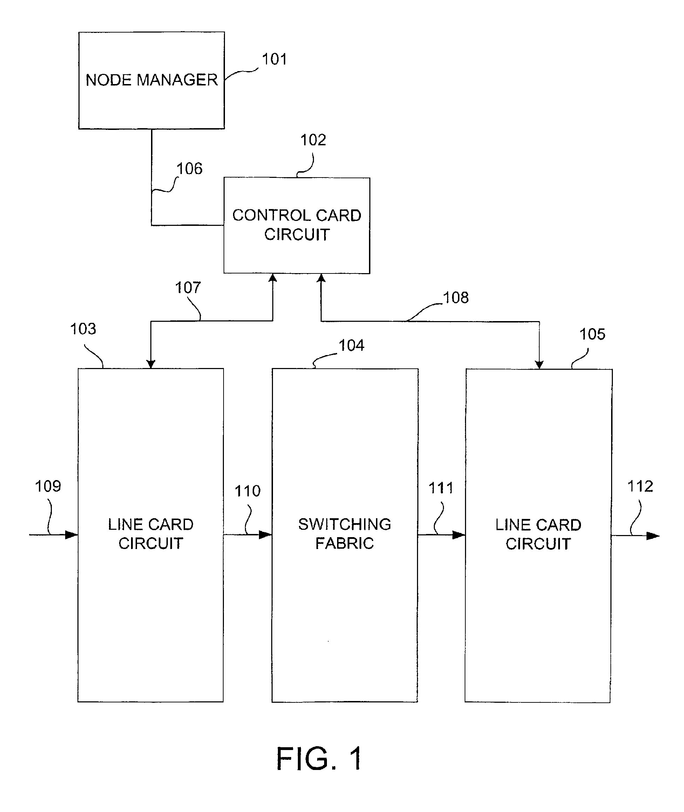

FIG. 1 is a block diagram illustrating an example of network apparatus in conjunction with which the present invention may be implemented. The apparatus includes a node manager 101, a control card circuit 102, a line card circuit 103, switching fabric 104, and a line card circuit 105.

The node manager 101 is coupled via connection 106 to control card circuit 102 and provides control of control card circuit 102. Control card circuit 102 is coupled via connection 107 to line card circuit 103. Control card circuit 102 is coupled via connection 108 to line card circuit 105. Control card circuit 102 provides control of line card circuit 103 and line card circuit 105. A first network connection 109 is coupled to line card circuit 103. Line card circuit 103 is coupled to switching fabric 104 via connection 110. Switching fabric 104 is coupled to line card circuit 105 via connection 111. Line card circuit 105 is coupled to a second network connection 112.

Line card circuit 103 receives network data from network connection 109 and routes the data to ports of connection 110. Switching fabric 104 contains a switching matrix that routes the ports of connection 110 to the appropriate ports of connection 111. Line card circuit 105 routes the network data from the ports of connection 111 to network connection 112. While line card circuit 103, switching fabric 104, and line card circuit 105 are illustrated as being uni-directional, passing data from left to right, these elements may be configured to pass data bi-directionally.

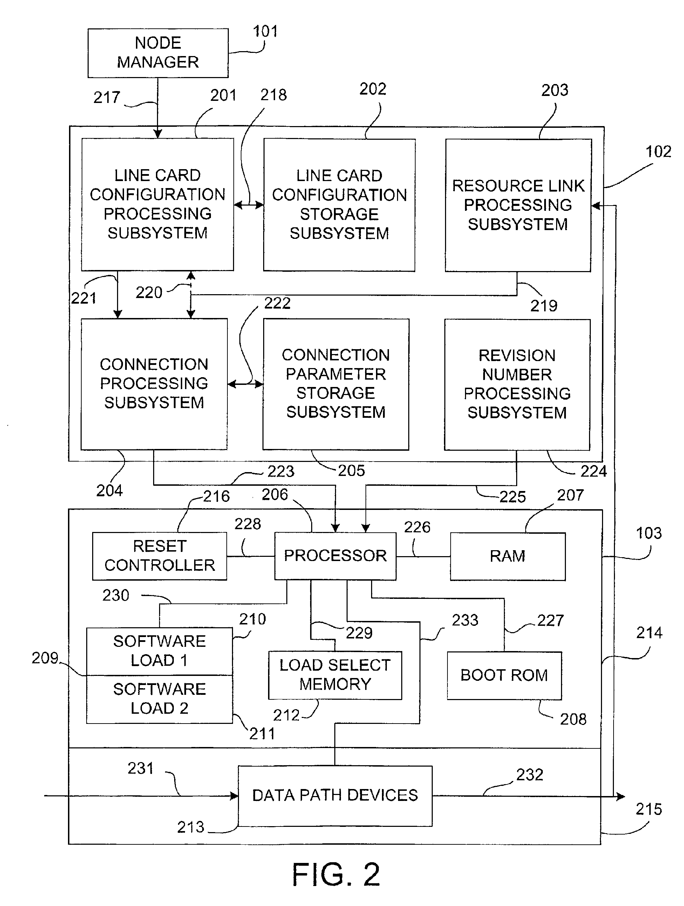

FIG. 2 is a block diagram illustrating network apparatus according to an embodiment of the present invention. The network apparatus includes node manager 101, control card circuit 102, and line card circuit 103. Control card circuit 102 includes line card configuration processing subsystem 201, line card configuration storage subsystem 202, resource link processing subsystem 203, connection processing subsystem 204, connection parameter storage subsystem 205, and revision number processing subsystem 224.

Node manager 101 is coupled to line card configuration processing subsystem 201 via connection 217. Line card configuration processing subsystem 201 is coupled to line card configuration storage system 202 via connection 218. Line card configuration processing subsystem 201 is coupled to connection processing subsystem 204 via connection 221. Connection processing subsystem 204 is coupled to connection parameter storage subsystem 205 via connection 222. Resource link processing subsystem 203 is coupled to connection processing subsystem 204 via connection 219. Optionally, resource link processing subsystem 203 may be coupled to line card configuration processing subsystem 201 via connection 220.

Line card circuit 103 includes line card control subsystem 214 and data path 215. Line card control system 214 includes processor 206, random access memory (RAM) 207, bootstrap read only memory (ROM) 208, flash memory 209, load select memory 212, and reset controller 216. Flash memory 209 includes a first software load 210 and a second software load 211. The first software load 210 and the second software load 211 each include a complete program of instructions to be executed by processor 206. One of the first software load 210 and the second software load 211 may be selected be storing a particular value in load select memory 212. When processor 206 is reset, the selected software load is provided to processor 206 for execution.

Data path 215 includes data path devices 213. Network connection 231 is coupled to data path devices 213. Data path devices 213 are coupled to connection 232. Connection 232 may also be coupled to resource link processing subsystem 203. Connection processing subsystem 204 is coupled to processor 206 via connection 223. Revision number processing subsystem 224 is coupled to processor 206 via connection 225.

In control card circuit 102, line card configuration processing subsystem 201 determines an appropriate configuration for line card circuit 103 and stores the configuration information in line card configuration storage subsystem 202. The configuration may be determined based on information received from node manager 101. Resource link processing subsystem 203 receives requests for resources passing through connection 232 and acts on those requests to allocate resources. Resource link processing subsystem 203 causes connection processing subsystem 204 to establish connections in data path devices 213 in response to the resource requests. Connection processing subsystem 204 may also establish connections based on control signals from line card configuration processing subsystem 201. Connection processing subsystem 204 stores connection parameters in connection parameter storage subsystem 205. Connection processing subsystem 204 passes connection parameters to processor 206 of line card circuit 103.

Processor 206 is coupled to data path devices 213 via connection 233. Processor 206 configures data path devices 213 to correctly route network data from network connection 231 to connection 232. Processor 206 stores information in RAM 207. When line card circuit 103 is initialized, instructions are read from boot ROM 208 to initiate the processing performed by processor 206. Reset controller 216 controls the reset operations for processor 206. Reset controller 216 allows a soft reset operation or a hard reset operation to be performed on processor 206. Flash memory 209 stores multiple software loads for processor 206. Load select memory 212 stores information to select which of the software loads of flash memory 209 is to be used by processor 206. As processor 206 is initialized, the processor transitions from operating on instructions received from boot ROM 208 to instructions received from flash memory 209. Such initialization may occur during either soft reset operations or hard reset operations.

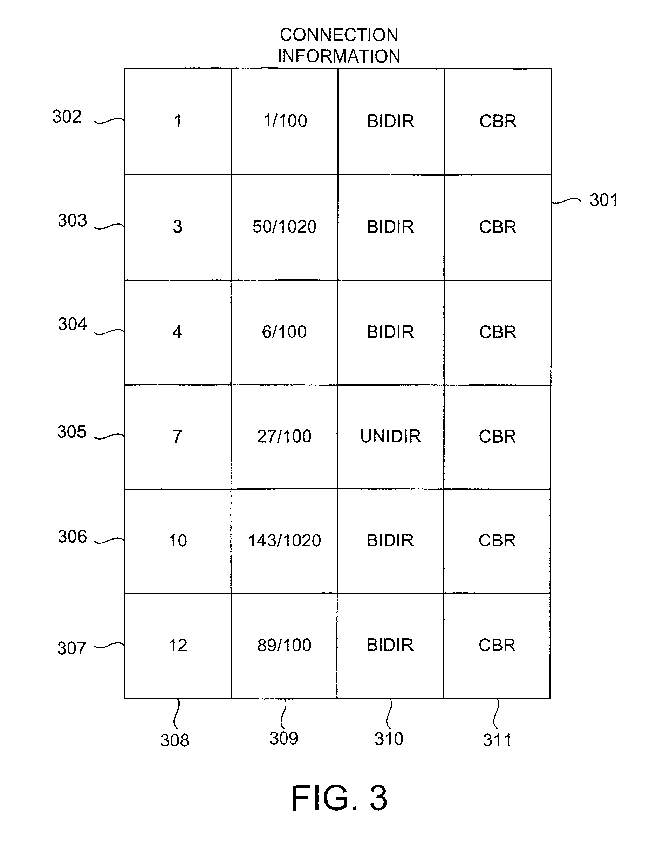

FIG. 3 is a diagram illustrating an example of connection information, such as connection parameters, that may be stored in connection parameter subsystem 205 in accordance with an embodiment of the present invention. The connection information pertains to a number of virtual connections 302, 303, 304, 305, 306, and 307. The virtual connections may include permanent virtual connections (PVC's), switched permanent virtual connections (SPVC's), and switch virtual connections (SVC's). Several items of information 308, 309, 310, and 311 are provided for each of the virtual connections in the connection information 301. For example, item 308 may represent a connection number, item 309 may represent a characteristic associated with that virtual connection, item 310 may indicate whether a connection is bi-directional or unidirectional, and item 311 may identify the type of virtual connection. A SVC is a datapath connection. A SVC signalling link is a connection from a link into a processor on a node. The SVC signalling link is used to set up a SVC. In accordance with an embodiment of the invention, SVC signalling links are maintained through a control card circuit coupled to a line card circuit while the line card processor is being reset.

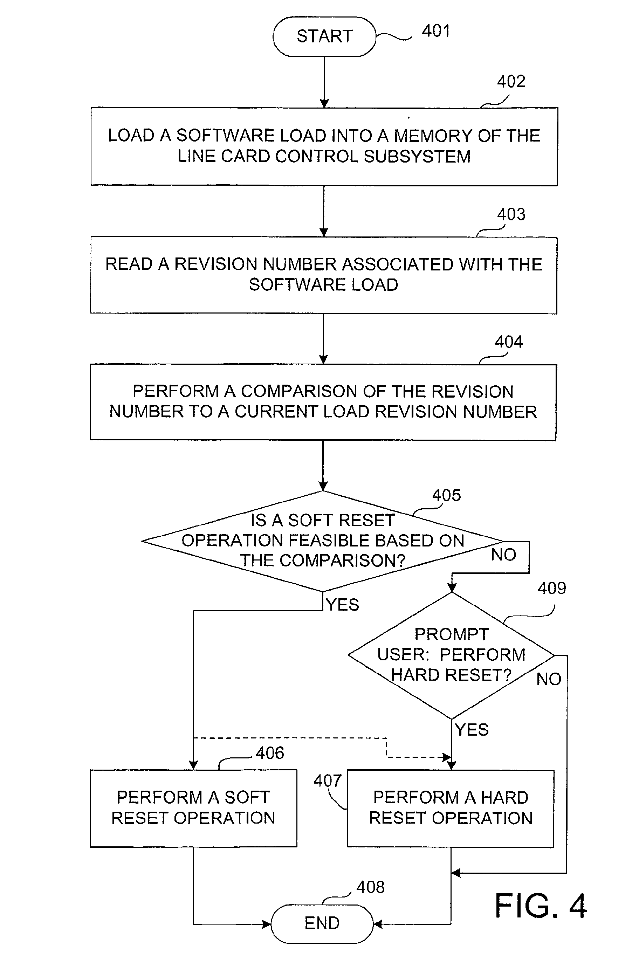

FIG. 4 is a flow diagram illustrating a process for determining a reset operation for a line card control subsystem in accordance with an embodiment of the present invention. The process begins in step 401 and continues to step 402. In step 402, a software load is loaded into a memory of a line card control subsystem. In step 403, a revision number associated with the software load is read. In step 404, a comparison is performed between the revision number and a current load revision number. In step 405, a determination is made as to the feasibility of a soft reset operation based on the comparison of step 404. In one embodiment of the invention, the feasibility of performing a soft reset operation is determined on the basis of whether the revision number read in step 403 is less than the current load revision number. The current load revision number represents the compatibility of the current software load to be soft reset with other software loads. If the revision number associated with the software load that was read in step 403 is less than the current load revision number, the software load is deemed to be older than the current load that processor 206 is currently processing and a soft reset operation is deemed infeasible. Likewise, if the revision number associated with the software load that was read in step 403 is greater than the current load revision number, the software load to which the revision number pertains is deemed to be a newer revision than the current load of software being processed by processor 206. In that case, the soft reset operation is also deemed to be infeasible.

However, if the revision number associated with the software load matches the current load revision number, a soft reset operation is deemed to be feasible. In the event a soft reset operation is not feasible, the process continues from step 405 to step 409. In step 409, a user prompt is provided. The user prompt prompts a user to initiate a hard reset operation. If a hard reset operation is initiated, the process continues to step 407. In step 407, a hard reset operation is performed. The hard reset operation necessitates completely resetting the line card circuit. During the hard reset operation, connections maintained by data path devices 213 are lost. However, the hard reset operation allows changes of the software load for processor 206 regardless of the revision number associated with the software load. If, in step 409, a hard reset operation is not initiated, the process continues to step 408, where it ends.

If, in step 405, a soft reset operation is deemed to be feasible, the process continues to step 406 or optionally to step 407. If the process continues to step 407, a hard reset operation is performed as described above. If the process continues to step 406, a soft reset operation is performed. During the soft reset operation, connections provided by data path devices 213 are maintained in accordance with an embodiment of the present invention. From either of steps 406 or 407, the process continues to step 408, where the process ends.

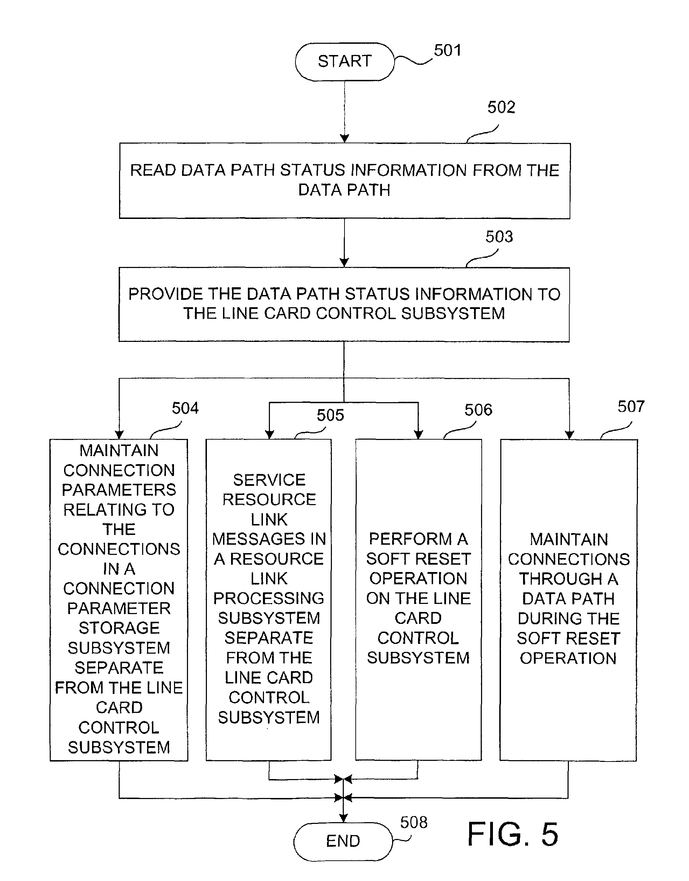

FIG. 5 is a flow chart illustrating a process for allowing resetting of a line card control subsystem in accordance with an embodiment of the present invention. The process begins in step 501 and continues to step 502. In step 502, data path status information is read from the data path. In step 503, the data path status information is provided to the line card control subsystem. From step 503, the process continues to steps 504, 505, 506, and 507, which may be performed concurrently. In step 504, connection parameters relating to the connections are maintained in a connection parameter storage subsystem separate from the line card control subsystem. In step 504, resource link messages are services in a resource link processing subsystem separate from the line card control subsystem. In step 506, a soft reset operation is performed on the line card control subsystem. In step 507, connections are maintained through a data path through a soft reset operation. The line card control subsystem is coupled to the data path. From steps 504, 505, 506, and 507, the process continues to step 508 where it ends.

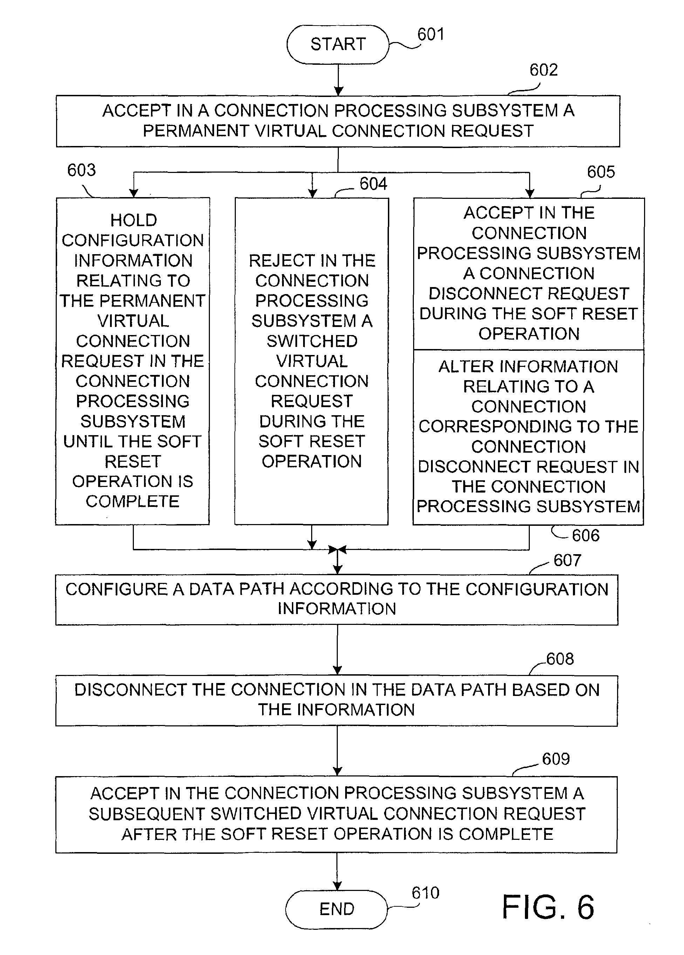

FIG. 6 is a flow chart illustrating a process for managing connection requests occurring during a soft reset operation of a line card control subsystem in accordance with an embodiment of the present invention. The process begins in step 601 and continues to step 602. In step 602, a connection processing subsystem accepts a permanent virtual connection request. Following step 602, a soft reset operation begins. In step 605, the connection processing subsystem accepts a connection disconnect request during the soft reset operation. In step 606, information relating to a connection corresponding to the connection disconnect request in the connection processing subsystem is altered. During the execution of steps 605 and 606, steps 603 and 604 may occur concurrently. In step 603, configuration information relating to the permanent virtual connection request in the connection processing subsystem is held until the soft reset operation is complete. In step 604, a switch virtual connection request is rejected in the connection processing subsystem during the soft reset operation.

The soft reset operation ends following steps 603, 604, and 606. In step 607, after the soft reset operation is complete, a data path is configured according to the configuration information. In step 608, after the soft reset operation is complete, the connection in the data path is disconnected based on the information. In step 609, a subsequent switched virtual connection request is accepted in the connection processing subsystem after the soft reset operation is complete. Following step 609, the process ends in step 610.

Accordingly, a method and apparatus for maintaining data communication during a line card soft reset operation has been described. It should be understood that the implementation of other variations and modifications of the invention in its various aspects will be apparent to those of ordinary skill in the art, and that the invention is not limited by the specific embodiments described. It is therefore contemplated to cover by the present invention, any and all modifications, variations, or equivalents that fall within the spirit and scope of the basic underlying principles disclosed and claimed herein.

## Claims

1. A method for allowing resetting of a line card control subsystem, the method comprising the steps of:
performing a soft reset operation on the line card control subsystem;
maintaining connections through a data path during the soft reset operation, the line card control subsystem coupled to the data path.

2. The method of claim 1 further comprising the step of:
servicing resource link messages in a resource link processing subsystem separate from the line card control subsystem.

3. The method of claim 2 further comprising the step of:
maintaining connection parameters relating to the connections in a connection parameter storage subsystem separate from the line card control subsystem.

4. The method of claim 1 further comprising the steps of:
reading data path status information from the data path; and
providing the data path status information to the line card control subsystem.

5. A method for determining a reset operation for a line card control subsystem comprising the steps of:
loading a software load into a memory of the line card control subsystem;
reading a revision number associated with the software load;
performing a comparison of the revision number to a current load revision number; and
determining a feasibility of a soft reset operation based on the comparison.

6. The method of claim 5 further comprising the step of:
when a soft reset operation is feasible, performing the soft reset operation.

7. The method of claim 5 further comprising the step of:
when a soft reset operation is feasible, performing a hard reset operation.

8. The method of claim 5 further comprising the step of:
when a soft reset operation is not feasible, providing a user prompt to initiate a hard reset operation.

9. A method for managing connection requests occurring during a soft reset operation of a line card control subsystem comprising the steps of:
accepting in a connection processing subsystem a permanent virtual connection request; holding configuration information relating to the permanent virtual connection request in the connection processing subsystem until the soft reset operation is complete;
after the soft reset operation is complete, configuring a data path according to the configuration information.

10. The method of claim 9 further comprising the steps of:
rejecting in the connection processing subsystem a switched virtual connection request during the soft reset operation; and
accepting in the connection processing subsystem a subsequent switched virtual connection request after the soft reset operation is complete.

11. The method of claim 10 further comprising the steps of:
accepting in the connection processing subsystem a connection disconnect request during the soft reset operation; and
altering information relating to a connection corresponding to the connection disconnect request in the connection processing subsystem;
after the soft reset operation is complete, disconnecting the connection in the data path based on the information.

12. A method for soft-resetting a line card circuit comprising the steps of:
resetting a processor of a line card control subsystem; and
maintaining connections through a data path coupled to the line card control subsystem during the step of resetting the processor.

13. The method of claim 12 further comprising the step of:
servicing resource link messages in a resource link processing subsystem separate from the line card control subsystem.

14. The method of claim 13 further comprising the step of:
maintaining connection parameters relating to the connections in a connection parameter storage subsystem separate from the line card control subsystem.

15. The method of claim 12 further comprising the steps of:
reading data path status information from the data path; and
providing the data path status information to the line card control subsystem.

16. Apparatus for maintaining data communication during a soft reset operation comprising:
a line card circuit further comprising:
a line card control subsystem, the line card control subsystem entering an inactive state during the soft reset operation; and
a data path operatively coupled to the line card control subsystem, the data path maintaining connections during the soft reset operation.

17. The apparatus of claim 16 further comprising:
a resource link processing subsystem separate from the line card control subsystem, the resource link processing subsystem operatively coupled to the data path to receive resource link messages, the resource link processing subsystem capable of servicing resource link messages during the soft reset operation.

18. The apparatus of claim 17 further comprising:
a connection parameter storage subsystem separate from the line card control subsystem, the connection parameter storage subsystem maintaining connection parameters relating to the connections.

19. The apparatus of claim 16 wherein the line card control subsystem reads data path status information from the data path.

20. The apparatus of claim 16 further comprising:
a revision number processing subsystem coupled to a memory device of the line card control subsystem for comparing a revision number associated with a software load to a current load revision number obtained from the memory device and for determining a feasibility of the soft reset operation.

21. The apparatus of claim 16 further comprising:
a connection processing subsystem separate from the line card control subsystem, the connection processing subsystem for managing connection requests during the soft reset operation.

22. The apparatus of claim of claim 16 further comprising:
a reset controller of the line card control subsystem operatively coupled to a processor of the line card control subsystem to assert a reset signal selected from a hard reset signal and a soft reset signal.
